# EUROPEAN PATENT APPLICATION

(11) **EP 4 852 212 A1**
(43) Date of publication of application: **09.12.2026**
(21) Application number: 25747630.9
(22) Date of filing: 21.01.2025
(51) Int. Cl.: H01M 50/636, H01M 50/502, H01M 50/186, H01M 50/317

(54) **BATTERY CELL AND ELECTRIC DEVICE**

(30) Priority: 29.01.2024 CN 202410121847
(71) Applicant: Ningde Amperex Technology Limited, Ningde, Fujian 352100 (CN)
(72) Inventor: ZHANG, Guowen, Ningde, Fujian 352100 (CN); CHEN, Mingqi, Ningde, Fujian 352100 (CN)
(74) Representative: Kraus & Lederer PartGmbB
(86) International application number: PCT/CN2025/073577
(87) International publication number: WO 2025/162058

(57) **Abstract**

A battery cell and an electrical device are provided. The battery cell includes a housing and a pressure relief assembly. The housing defines an accommodation space and is provided with an injection hole in communication with the accommodation space. The pressure relief assembly covers the injection hole. The pressure relief assembly includes an intermediate connector, a sealing member, and a pressure relief member. The housing, the intermediate connector, the sealing member, and the pressure relief member are sequentially stacked along a first direction. The intermediate connector includes a first main portion and a first weld mark portion. The first main portion includes a first sidewall disposed along a circumferential direction. The first weld mark portion connects the first sidewall and the housing. The safety of the battery cell is improved.

## Description

This application claims priority to Chinese Patent Application No. 202410121847.9, filed with China National Intellectual Property Administration on January 29, 2024 and entitled "BATTERY CELL AND ELECTRICAL DEVICE", which is incorporated herein by reference in its entirety.

### TECHNICAL FIELD

This application relates to the technical field of electrical energy storage, and in particular, to a battery cell and an electrical device.

### BACKGROUND

A battery cell is a device that converts external energy into electrical energy and stores the energy internally so that the electrical energy can be supplied to an external device (such as a portable electronic device) when necessary. In the related art, the battery cell includes a housing. The housing is provided with an injection hole. An electrolyte may be injected into the housing through the injection hole, and the injection hole is subsequently sealed with a pressure relief assembly.

If the sealing performance of the pressure relief assembly for the injection hole is inferior in a process of assembling the battery cell, the risk of electrolyte leakage of the battery cell will be relatively high, thereby impairing the safety of the battery cell.

Accordingly, it is necessary to design a battery cell and an electrical device to address the above technical problem.

### SUMMARY

Some embodiments of this application provide a battery cell and an electrical device to improve safety of the battery cell.

According to a first aspect, an embodiment of this application provides a battery cell. The battery cell includes:
a housing, defining an accommodation space, and provided with an injection hole in communication with the accommodation space; and
a pressure relief assembly, covering the injection hole, where the pressure relief assembly includes an intermediate connector, a sealing member, and a pressure relief member; the housing, the intermediate connector, the sealing member, and the pressure relief member are sequentially stacked along a first direction; the intermediate connector includes a first main portion and a first weld mark portion; the first main portion includes a first sidewall disposed along a circumferential direction; and the first weld mark portion connects the first sidewall and the housing.

In some embodiments, a projection of the sealing member projected onto the intermediate connector along the first direction is a first projection. The first projection lies within the first main portion and is spaced apart from the first weld mark portion.

In some embodiments, a minimum spacing between the first projection and the first weld mark portion is d3, and d3 ranges from 0.02 mm to 0.5 mm.

In some embodiments, d3 ranges from 0.05 mm to 0.22 mm.

In some embodiments, the first weld mark portion is located at an edge of the intermediate connector.

In some embodiments, a dimension of the first weld mark portion along a second direction is a width of the first weld mark portion. The first weld mark portion includes a first surface of the housing and a second surface oriented toward the housing. A width of the first surface is d1, and d1 ranges from 0.05 mm to 0.25 mm. The second direction is perpendicular to the first direction.

In some embodiments, a width of the second surface is d2, and d2 ranges from 0.02 mm to 0.15 mm.

In some embodiments, the housing includes a housing wall and a second weld mark portion. The second weld mark portion is embedded in the housing wall and is connected to the first weld mark portion.

In some embodiments, a length of the second weld mark portion along the first direction is H2, and H2 ranges from 0.01 mm to 0.06 mm.

In some embodiments, the intermediate connector is provided with a first through-hole in communication with the injection hole. The sealing member is provided with a second through-hole in communication with the injection hole. The pressure relief member covers the second through-hole.

In some embodiments, the projection of the sealing member projected onto the intermediate connector along the first direction partially falls within the first through-hole.

In some embodiments, an edge of the sealing member is located outward of a projection of the pressure relief member projected onto the sealing member along the first direction.

In some embodiments, a projection of the intermediate connector projected onto the housing along the first direction partially falls within the injection hole.

In some embodiments, the sealing member includes a first adhesive layer, a second adhesive layer, and a third adhesive layer sequentially arranged along the first direction. A melting point of the second adhesive layer is higher than a melting point of the first adhesive layer. The melting point of the second adhesive layer is higher than a melting point of the third adhesive layer.

In some embodiments, a maximum length of the housing along a second direction is greater than a maximum length of the pressure relief assembly along a third direction. A maximum length of the housing along the first direction is greater than the maximum length of the pressure relief assembly along the third direction.

A maximum length of the pressure relief assembly along the second direction is greater than the maximum length of the pressure relief assembly along the third direction. The first direction, the second direction, and the third direction are perpendicular to each other.

In some embodiments, a length of the intermediate connector along the third direction is L1, and L1 ranges from 1.0 mm to 6 mm.

In some embodiments, the first weld mark portion is a weld mark formed by wobble welding.

According to a second aspect, an embodiment of this application further provides an electrical device. The electrical device includes the battery cell according to the second aspect. The battery cell is configured to provide electrical energy.

In contrast to the related art, in the battery cell and electrical device provided herein, the first weld mark portion is welded to the housing, such that the housing is stably connected to the intermediate connector, thereby preventing an electrolyte from leaking out of the housing through a clearance between the housing and the first weld mark portion. With the sealing member stacked between the first main portion and the pressure relief member, the intermediate connector is stably connected to the pressure relief member, thereby preventing the electrolyte from flowing out of the housing through the clearance between the intermediate connector and the pressure relief member. With the first weld mark portion connecting the first sidewall and the housing, the size of the intermediate connector is reduced, thereby miniaturizing the pressure relief assembly. The first weld mark portion is connected to the first sidewall, thereby increasing the spacing between the first weld mark portion and the sealing member, avoiding the impact caused by the formation of the first weld mark portion to the structure of the sealing member. In this way, electrolyte leakage of the battery cell can be reduced or avoided to some extent, thereby improving the safety of the battery cell.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic perspective view of a battery cell according to an embodiment of this application;
FIG. 2 is a schematic exploded view of a battery cell according to an embodiment of this application;
FIG. 3 is a schematic diagram of a partial cross-sectional structure of a battery cell according to an embodiment of this application;
FIG. 4 is a schematic diagram of a partial cross-sectional structure of a battery cell according to an embodiment of this application;
FIG. 5 is a schematic diagram of a partial cross-sectional structure of a battery cell according to a comparative embodiment in the related art;
FIG. 6 is a schematic diagram of a partial cross-sectional structure of a battery cell according to an embodiment of this application;
FIG. 7 is a schematic diagram of a partial cross-sectional structure of a sealing member according to an embodiment of this application;
FIG. 8 is a schematic diagram of a planar structure of a battery cell according to an embodiment of this application;
FIG. 9 is a schematic perspective view of a battery cell according to an embodiment of this application;
FIG. 10 is an enlarged view of a part A shown in FIG. 9; and
FIG. 11 is an SEM image of a partial cross-sectional structure of a battery cell according to an embodiment of this application.

List of reference signs:
1. housing; 11. injection hole; 12. housing wall; 13. second weld mark portion; 14. accommodation space; 15. upper cover; 16. lower cover; 17. recess;
2. pressure relief assembly; 21. intermediate connector; 211. first main portion; 212. first weld mark portion; 213. first sidewall; 214. first through-hole; 22. sealing member; 221. second through-hole; 224. first adhesive layer; 222. second adhesive layer; 223. third adhesive layer; 23. pressure relief member.
X. first direction; Y. second direction; Z. third direction

### DETAILED DESCRIPTION

The following describes features and exemplary embodiments in detail according to each aspect of this application. In the following detailed description, many details are provided to enable a comprehensive understanding of this application. However, it is apparent to a person skilled in the art that this application can be implemented without some of the details. The following description of the embodiments is merely intended to enable a better understanding of this application by illustrating examples of this application.

It is hereby noted that to the extent that no conflict occurs, embodiments of this application and the features in the embodiments may be combined with each other. The following describes some embodiments of this application in detail with reference to drawings.

According to a first aspect, this application provides a battery cell. For better understanding of the technical solutions and technical effects of this application, the following describes some embodiments of this application in detail with reference to drawings.

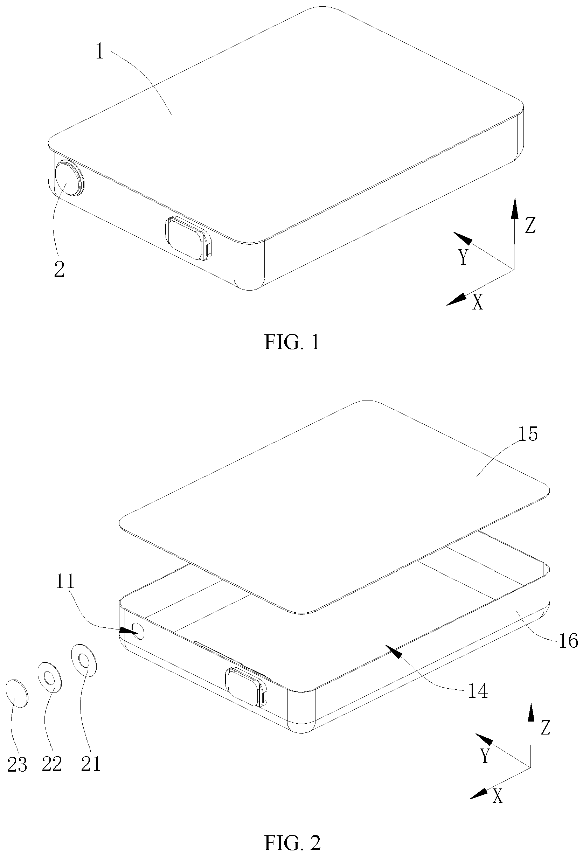

Referring to FIG. 1, FIG. 2, FIG. 3, and FIG. 4, a battery cell includes a housing 1 and a pressure relief assembly 2. The housing 1 defines an accommodation space 14 and is provided with an injection hole 11 in communication with the accommodation space 14. The pressure relief assembly 2 covers the injection hole 11. The pressure relief assembly 2 includes an intermediate connector 21, a sealing member 22, and a pressure relief member 23. The housing 1, the intermediate connector 21, the sealing member 22, and the pressure relief member 23 are sequentially stacked along a first direction X. The intermediate connector 21 includes a first main portion 211 and a first weld mark portion 212. The first weld mark portion 212 surrounds the first main portion 211. The first main portion 211 includes a first sidewall 213 disposed along a circumferential direction. The first weld mark portion 212 connects the first sidewall 213 and the housing 1.

The battery cell provided herein may be specifically a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell.

The housing 1 includes an upper cover 15 and a lower cover 16. The upper cover 15 and the lower cover 16 are joined together to define an accommodation space 14 of the housing 1. A battery cell may be disposed in the accommodation space 14. The battery cell includes a positive electrode plate, a negative electrode plate, and a separator. In the battery cell, the parts coated with an active material constitute a positive electrode plate and a negative electrode plate of the battery cell, and the parts coated with no active material constitute tabs. An electrolyte may be injected into the accommodation space 14 through the injection hole 11, such that the positive electrode plate, the negative electrode plate, and the separator are immersed in the electrolyte. In some embodiments, the positive electrode plate, the negative electrode plate, and the separator are wound together to form a winding structure. In other embodiments, the positive electrode plate, the separator, and the negative electrode plate are stacked in sequence to form a stacked structure. A person skilled in the art may select an appropriate battery cell as needed. In a charge-discharge process of the battery cell, a positive active material and a negative active material react with an electrolyte. The tabs are configured to connect to electrode terminals to form a current loop. The electrode terminals extend out from one end of the housing 1.

The housing 1 may include a top wall and a bottom wall arranged along the thickness direction Z, and a sidewall connecting the top wall and the bottom wall. The injection hole 11 may be provided in the sidewall. The first direction X may be a length direction or a width direction of the housing 1.

The pressure relief assembly 2 is welded to the housing 1 through an intermediate connector 21, such that the pressure relief assembly 2 seals the injection hole 11 and prevents the electrolyte in the housing 1 from leaking. The sealing member 22 is made of a material with a preset melting point. The preset melting point may be lower than the melting point of the intermediate connector 21 and/or lower than the melting point of the pressure relief member 23. When the battery cell is in a thermal runaway state, the temperature of the sealing member 22 reaches the preset melting point, thereby causing the sealing member 22 to melt to form a pressure relief passage between the intermediate connector 21 and the pressure relief member 23. The internal pressure within the housing 1 is relieved through the pressure relief passage, thereby avoiding or reducing the occurrence of explosion of the battery cell.

The intermediate connector 21 may be in the form of a metal sheet to facilitate welding of the intermediate connector to the housing 1. The intermediate connector 21 may be a nickel sheet with a passivation layer. The passivation layer may be a chromium oxide layer. Alternatively, the pressure relief member 23 may be in the form of a metal sheet to make it convenient for the sealing member 22 to connect the intermediate connector 21 and the pressure relief member 23. The pressure relief member 23 may be a nickel sheet containing a passivation layer. The passivation layer may be a chromium oxide layer. A cleaned nickel sheet may be immersed in a chromate solution to form a chromium oxide passivation layer on the surface of the nickel sheet. Optionally, the thickness of the passivation layer ranges from 10 nm to 150 nm. The passivation layer can reduce or avoid corrosion of the intermediate connector 21 and the pressure relief member 23 caused by the electrolyte. The intermediate connector 21 and the pressure relief member 23 may be prepared from different materials, such that the intermediate connector 21 and the pressure relief member 23 possess different physical and chemical properties. Alternatively, the intermediate connector 21 and the pressure relief member 23 may be prepared from the same material, thereby simplifying the preparation process.

During preparation of a battery cell, the intermediate connector 21, the sealing member 22, and the pressure relief member 23 may be sequentially stacked to pre-assemble a pressure relief assembly 2. The pre-assembled pressure relief assembly 2 is then welded to the housing 1 such that the pressure relief assembly 2 seals the injection hole 11. The intermediate connector 21 may be connected to the housing 1 by welding. During welding of the intermediate connector 21 to the housing 1, a welding torch acts on an edge of the intermediate connector 21, such that the edge of the intermediate connector 21 is melted together with a region corresponding to the edge in the housing 1, to coagulate together to form a first weld mark portion 212. The first weld mark portion 212 is located at the edge of the intermediate connector 21. Because the first weld mark portion 212 is a weld mark formed by welding, a crystal structure of the first weld mark portion 212 is different from that of the first main portion 211, thereby forming an interface. The first sidewall 213 is located at the interface.

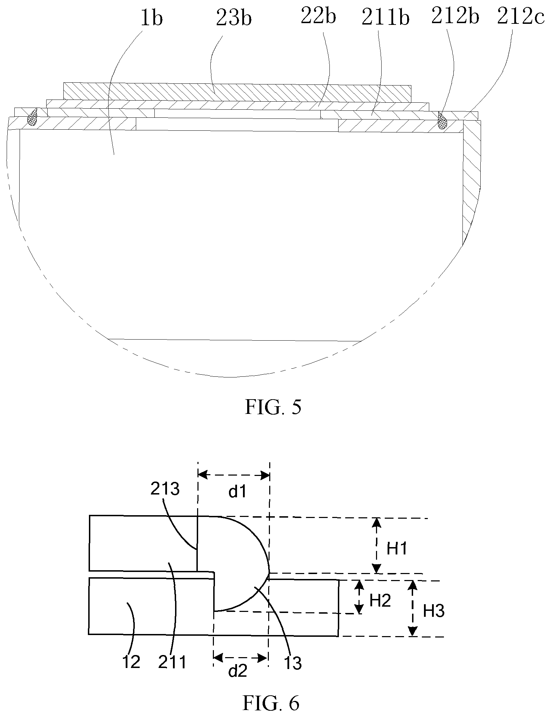

Referring to FIG. 5, which is a schematic cross-sectional structural diagram of a pressure relief assembly according to a comparative embodiment in the related art, an intermediate connector 21b, a sealing member 22b, and a pressure relief member 23b in the pressure relief assembly in this comparative embodiment are stacked in sequence. During welding of the intermediate connector 21b to the housing 1, the welding torch acts on a junction between the main portion 211b and an edge portion 212c of the intermediate connector 21b. A material at the junction is melted to form a weld mark portion 212b. After welding, the intermediate connector 21b includes the main portion 211b, the weld mark portion 212b, and the edge portion 212c that are sequentially connected. The weld mark portion 212b is not located at the edge of the intermediate connector 21. When the intermediate connector 21 in this embodiment and the intermediate connector 21b in the comparative embodiment are of the same size, a distance between the first weld mark portion 212 and the sealing member 22 is greater than a distance between the weld mark portion 212b and the sealing member 22b, thereby avoiding or reducing damage to the structure of the sealing member 22 in a process of assembling the pressure relief assembly 2 and the housing 1 together.

In this embodiment, the first weld mark portion 212 is welded to the housing 1, such that the housing 1 is stably connected to the intermediate connector 21, thereby preventing an electrolyte from leaking out of the housing 1 through a clearance between the housing 1 and the first weld mark portion 212. With the sealing member 22 stacked between the first main portion 211 and the pressure relief member 23, the intermediate connector 21 is stably connected to the pressure relief member 23, thereby preventing the electrolyte from flowing out of the housing 1 through the clearance between the intermediate connector 21 and the pressure relief member 23. With the first weld mark portion 212 connecting the first sidewall 213 and the housing 1, the size of the intermediate connector 21 is reduced, thereby miniaturizing the pressure relief assembly 2. The first weld mark portion 212 is connected to the first sidewall 213, thereby increasing the spacing between the first weld mark portion 212 and the sealing member 22, avoiding the impact caused by the formation of the first weld mark portion 212 to the structure of the sealing member 22. In this way, electrolyte leakage of the battery cell can be reduced or avoided to some extent, thereby improving the safety of the battery cell.

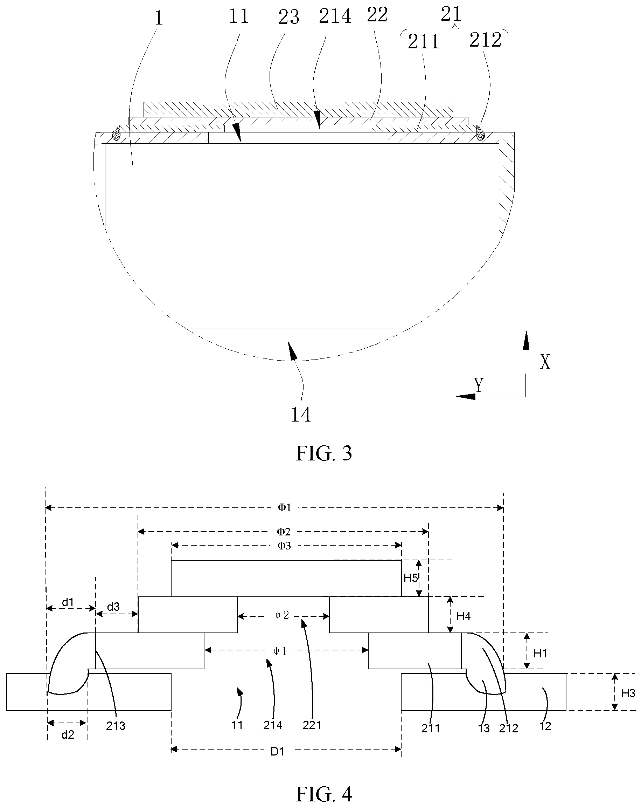

Referring to FIG. 4, in some embodiments, a projection of the sealing member 22 projected onto the intermediate connector 21 along the first direction X is a first projection. The first projection lies within the first main portion 211 and is spaced apart from the first weld mark portion 212.

The projection of the sealing member 22 projected onto the intermediate connector 21 along the first direction X is located within the first main portion 211 and is spaced apart from the first weld mark portion 212. In this way, during welding of the first weld mark portion 212 to the housing 1, the welded region is separated from the sealing member 22 by a specified distance. This arrangement can avoid or reduce damage to the pressure relief assembly 2 caused by a welding operation that interferes with the sealing member 22 in connecting the intermediate connector 21 and the pressure relief member 23 during welding of the first weld mark portion 212 to the housing 1, thereby improving the operational safety of the prepared battery cell.

In some embodiments, a minimum spacing d3 between the first projection and the first weld mark portion 212 ranges from 0.02 mm to 0.5 mm.

If d3 is excessively small, the heat generated during formation of the first weld mark portion 212 is prone to be conducted to the sealing member 22, thereby reducing the reliability of the sealing member 22. If d3 is excessively large, the size of the intermediate connector 21 becomes excessively large or the size of the sealing member 22 becomes excessively small. An excessively large intermediate connector 21 is unfavorable for miniaturization of the battery cell. An excessively small sealing member 22 results in insufficient pressure-relief capability of the pressure relief passage formed by the molten sealing member 22 under a thermal runaway condition. By setting d3 to range from 0.02 mm to 0.5 mm, this application reduces or avoids the adverse effect of the heat generated during a welding process on the reliability of the sealing layer, and achieves suitable dimensions of the intermediate connector 21 and sealing member 22. Optionally, d3 ranges from 0.05 mm to 0.22 mm, thereby further ensuring the reliability of the sealing layer while achieving miniaturization of the battery cell.

In some embodiments, a dimension of the first weld mark portion 212 along a second direction Y is a width of the first weld mark portion 212. The first weld mark portion 212 includes a first surface facing away from the housing 1 and a second surface oriented toward the housing 1. A width of the first surface is d1, and d1 ranges from 0.05 mm to 0.25 mm. The second direction Y is perpendicular to the first direction X.

When the intermediate connector 21 is annular, the second direction Y may be a radial direction of the intermediate connector 21. If d1 is excessively small, the ability of the first weld mark portion 212 to conduct heat to the second weld mark portion 13 is adversely affected, thereby reducing the connection area between the first weld mark portion 212 and the second weld mark portion 13. If d1 is excessively large, the spacing between the first weld mark portion 212 and the sealing member 22 may be affected, and the process of forming the first weld mark portion 212 may affect the structure of the sealing member 22. By setting d1 to range from 0.05 mm to 0.25 mm, it is ensured that the first weld mark portion 212 and the second weld mark portion 13 formed during the welding are stably connected, and that a sufficiently large spacing between the first weld mark portion 212 and the sealing member 22 is maintained, thereby avoiding or reducing the impact caused by a welding operation to the sealing member 22. Optionally, d1 ranges from 90 µm to 120 µm.

In some embodiments, a width of the second surface is d2, and d2 ranges from 0.02 mm to 0.15 mm.

If d2 is excessively small, the stability of the connection between the first weld mark portion 212 and the housing 1 is adversely affected. If d2 is excessively large, a large amount of thermal energy generated by welding during formation of the first weld mark portion 212 is conducted to the housing, thereby probably affecting the electrolyte in the housing 1 and impairing the quality of the battery cell. By setting d2 to range from 0.02 mm to 0.15 mm, it is ensured that the first weld mark portion 212 formed during welding is stably connected to the housing 1, and the impact of thermal energy generated during welding onto the electrolyte and the battery cell is avoided or reduced. When the welding torch acts on a surface, facing away from the housing 1, of the intermediate connector 21 to form the first weld mark portion 212, operating parameters of the welding torch are controlled to make d1 greater than d2 or make d1 equal to d2.

In some embodiments, the housing 1 includes a housing wall 12 and a second weld mark portion 13. The second weld mark portion 13 is embedded in the housing wall 12 and is connected to the first weld mark portion 212.

When the welding gun acts on the intermediate connector 21, heat is conducted through the intermediate connector 21 to the housing 1, causing a part of the housing 1 to melt to form a second weld mark portion 13 connected to the first weld mark portion 212. The parameters of the welding gun are controlled such that the resulting second weld mark portion 13 is embedded in the housing wall 12 without leaving the second weld mark portion 13 to run through the housing wall 12, so as to avoid overwelding and prevent the welding operation from interfering with the electrolyte, the battery cell, and other components within the housing 1.

Referring to FIG. 6, in some embodiments, a length of the second weld mark portion 13 along the first direction X is H2, and H2 ranges from 0.01 mm to 0.06 mm.

The length of the first weld mark portion 212 along the first direction X is H1. Because the first weld mark portion 212 runs through the first main portion 211, H1 may be equal to the length of the intermediate connector 21 along the first direction X. The second weld mark portion 13 is embedded in the housing wall 12 on which an injection hole 11 is formed in the housing 1, such that the length H2 of the second weld mark portion 13 along the first direction X is less than the length H3 of the housing wall 12 along the first direction X. If H2 is excessively small, the stability of the connection between the housing 1 and the second weld mark portion 13 is adversely affected. If H2 is excessively large, the resulting second weld mark portion 13 is excessively deep and leads to overwelding. By setting H2 to range from 0.01 mm to 0.06 mm, this application ensures a stable connection between the first weld mark portion 212 and the second weld mark portion 13 formed during the welding, and ensures sufficiently small dimensions of the second weld mark portion 13, thereby avoiding or reducing the adverse effect of the formation of the second weld mark portion 13 on the electrolyte and the battery cell.

In some embodiments, the intermediate connector 21 is provided with a first through-hole 214 in communication with the injection hole 11, the sealing member 22 is provided with a second through-hole 221 in communication with the injection hole 11, and the pressure relief member 23 covers the second through-hole 221.

The injection hole 11, the first through-hole 214, and the second through-hole 221 may be arranged coaxially. The accommodation space 14, the injection hole 11, the first through-hole 214, and the second through-hole 221 are connected sequentially. The diameter of the injection hole 11 may be greater than or equal to the diameter of the first through-hole 214, and the diameter of the first through-hole 214 is greater than the diameter of the second through-hole 221. When the battery cell is thermally runaway, the pressure relief passage formed by melting of the sealing member 22 communicates with the second through-hole 221, such that the pressure relief passage can expel high-pressure gas from the accommodation space 14.

In some embodiments, the projection of the sealing member 22 projected onto the intermediate connector 21 along the first direction X partially falls within the first through-hole 214.

The sealing member 22 and the intermediate connector 21 may be annular. The outer diameter Φ1 of the intermediate connector 21 is greater than the outer diameter Φ2 of the sealing member 22. In other words, the projection of an outer edge of the sealing member 22 along the first direction X lies inward of the outer edge of the intermediate connector 21. Consequently, the first projection of the sealing member 22 stacked on the intermediate connector 21 is spaced apart from the first weld mark portion 212. The inner diameter ψ1 of the intermediate connector 21 is greater than the inner diameter ψ1 of the sealing member 22, such that the projection of the sealing member 22 projected onto the intermediate connector 21 in the first direction X partially falls within the first through-hole 214, thereby improving the hermeticity of the sealing member 22 between the intermediate connector 21 and the pressure relief member 23.

In some embodiments, an edge of the sealing member 22 is located outward of a projection of the pressure relief member 23 projected onto the sealing member 22 along the first direction X.

The outer diameter Φ3 of the pressure relief member 23 is smaller than the outer diameter Φ2 of the sealing member 22, such that the edge of the sealing member 22 is located outward of the projection of the pressure relief member 23 projected onto the sealing member 22 along the first direction X. The pressure relief member 23 can be stacked on the sealing member 22, thereby ensuring effective sealing between the sealing member 22 and the pressure relief member 23. The outer diameter Φ3 of the pressure relief member 23 is greater than the inner diameter ψ1 of the sealing member 22, such that the pressure relief member 23 can cover the second through-hole 221 along the first direction X, thereby implementing sealing of the injection hole 11.

In some embodiments, a projection of the intermediate connector 21 projected onto the housing 1 along the first direction X partially falls within the injection hole 11.

The outer diameter Φ1 of the intermediate connector 21 is greater than the diameter r1 of the injection hole 11, such that the intermediate connector 21 can cover one side of the injection hole 11. The inner diameter ψ1 of the intermediate connector 21 is smaller than the diameter r1 of the injection hole 11, such that the projection of the intermediate connector 21 projected onto the housing 1 along the first direction X partially falls within the injection hole 11, thereby increasing the diameter of the injection hole 11 and facilitating injection of an electrolyte into the accommodation space 14 through the injection hole 11. This arrangement also reduces the diameter of the first through-hole 214, the diameter of the second through-hole 221, and the size of the pressure relief member 23, and improves the hermeticity between the intermediate connector and the sealing member 22 and the hermeticity between the sealing member 22 and the pressure relief member 23.

The diameter D1 of the injection hole 11 may range from 0.5 mm to 3 mm, thereby ensuring efficient electrolyte injection through the injection hole 11.

In some embodiments, the outer diameter Φ1 of the intermediate connector 21 ranges from 3 mm to 4 mm, the inner diameter ψ1 of the intermediate connector 21 ranges from 0.5 mm to 2 mm, and the thickness of the intermediate connector 21 along the first direction X ranges from 0.05 mm to 1.5 mm. The inner diameter ψ1 of the intermediate connector 21 is the diameter of the first through-hole 214. If the inner diameter ψ1 of the intermediate connector 21 is excessively large, a region of connection between the intermediate connector 21 and the housing 1 is increased, thereby being unfavorable for sealing between the intermediate connector 21 and the housing 1. If the inner diameter ψ1 of the intermediate connector 21 is excessively small, the diameter of the first through-hole 214 is reduced, thereby being unfavorable for pressure relief through the first through-hole 214 under a thermal runaway condition.

In an embodiment, an initial outer diameter of a sealing member 22 that is not bonded to an intermediate connector 21 or a pressure relief member 23 ranges from 2 mm to 4 mm, an initial inner diameter of the sealing member 22 ranges from 0.8 mm to 1.9 mm, and an initial thickness of the sealing member 22 along the first direction X ranges from 0.05 mm to 1.5 mm. The sealing member 22 is subjected to a hot-pressing process so that the sealing member 22 connects the intermediate connector 21 and the pressure relief member 23. The outer diameter Φ2 of the hot-pressed sealing member 22 ranges from 2.5 mm to 3.0 mm. The inner diameter ψ2 of the sealing member 22 ranges from 0.6 mm to 1.0 mm. The thickness of the sealing member 22 along the first direction X ranges from 0.03 mm to 0.07 mm. The inner diameter ψ2 of the sealing member 22 is the diameter of the second through-hole 221. If the inner diameter ψ2 of the sealing member 22 is excessively large, an area of connection between the sealing member 22 and the pressure relief member 23 is reduced, thereby being unfavorable for sealing between the sealing member 22 and the pressure relief member 23. If the inner diameter ψ2 of the sealing member 22 is excessively small, the diameter of the second through-hole 221 is reduced, and the molten sealing member 22 is prone to excessive adhesive overflow, making it difficult to form a pressure relief passage, and hindering pressure relief under a thermal runaway condition.

In an embodiment, the outer diameter Φ3 of the pressure relief member 23 ranges from 2 mm to 3 mm, and the thickness of the pressure relief member 23 along the first direction X ranges from 0.1 mm to 0.2 mm. An excessively large outer diameter Φ3 of the pressure relief member 23 is unfavorable for the molten sealing member 22 to form a pressure relief passage, and hinders pressure relief under a thermal runaway condition. An excessively small outer diameter Φ3 of the pressure relief member 23 reduces an area available, on the pressure relief member 23, for connecting to the sealing member 22, thereby being unfavorable for sealing between the sealing member 22 and the pressure relief member 23.

Optionally, the outer diameter Φ1 of the intermediate connector 21 is 3.4 mm, the inner diameter ψ1 of the intermediate connector 21 is 1 mm, and the thickness of the intermediate connector 21 along the first direction X is 0.08 mm. The outer diameter Φ3 of the pressure relief member 23 is 2.5 mm. The thickness of the pressure relief member 23 along the first direction X is 0.08 mm. The diameter D1 of the injection hole 11 ranges from 1 mm to 2 mm. An initial outer diameter of the sealing member 22 that is not bonded to an intermediate connector 21 or a pressure relief member 23 is 2.2 mm, an initial inner diameter of the sealing member 22 is 1.2 mm, and an initial thickness of the sealing member 22 along the first direction X is 0.08 mm.

The sealing member 22 may be a single-layer structure or a multilayer structure. The single-layer structure refers to a sealing member 22 prepared from a single material, such that every part of the sealing member 22 melts at the same melting point. The multilayer structure refers to a sealing member 22 prepared from different materials, such that different layers differ in melting point.

In some embodiments, the sealing member 22 is a single-layer structure, and the melting point of the sealing member 22 is 123±5 °C.

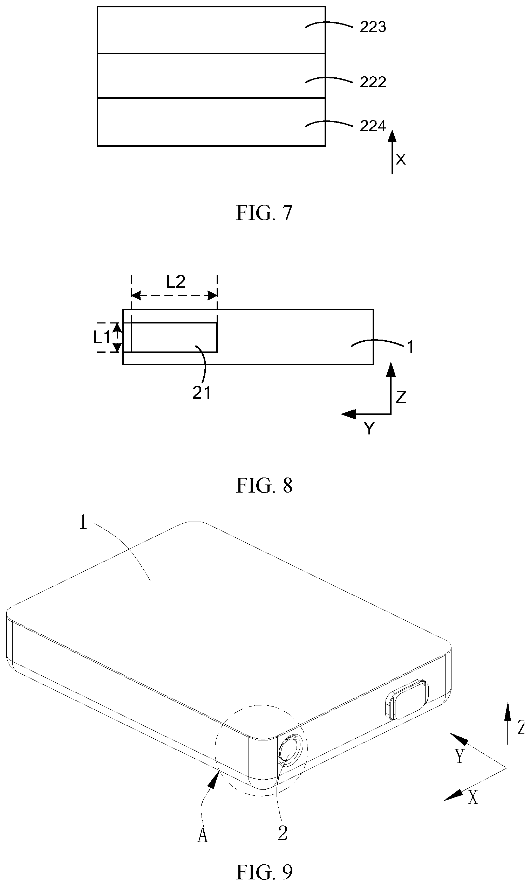

Referring to FIG. 7, in some embodiments, the sealing member 22 is a double-layer structure, including a first adhesive layer 224 and a second adhesive layer 222. The first adhesive layer 224 is located on one side, close to the intermediate connector 21, of the second adhesive layer 222. The melting point of the first adhesive layer 224 is 123±5 °C.

In some embodiments, the sealing member 22 includes a first adhesive layer 224, a second adhesive layer 222, and a third adhesive layer 223 sequentially arranged along the first direction X. The melting point of the second adhesive layer 222 is higher than the melting point of the first adhesive layer 224. The melting point of the second adhesive layer 222 is higher than the melting point of the third adhesive layer 223.

The first adhesive layer 224 and the third adhesive layer 223 may be made of the same material. Optionally, the melting points of the first adhesive layer 224 and the third adhesive layer 223 are 123±5 °C. The melting point of the second adhesive layer 222 is 145±10 °C. In the event of thermal runaway, the first adhesive layer 224 and the third adhesive layer 223 melt prior to the second adhesive layer 222, such that the second adhesive layer 222 can support the first adhesive layer 224 and the third adhesive layer 223. When the first adhesive layer 224 melts, a pressure relief passage is formed between the second adhesive layer 222 and the intermediate connector 21. When the third adhesive layer 223 melts, a pressure relief passage is formed between the second adhesive layer 222 and the pressure relief member 23.

Referring to FIG. 8 and FIG. 9, in some embodiments, a maximum length of the housing 1 along a second direction Y is greater than a maximum length of the pressure relief assembly along a third direction Z. A maximum length of the housing 1 along the first direction X is greater than the maximum length of the pressure relief assembly along the third direction Z.

A maximum length L2 of the pressure relief assembly 2 along the second direction Y is greater than the maximum length L1 of the pressure relief assembly 2 along the third direction Z. The first direction X, the second direction Y, and the third direction Z are perpendicular to each other.

A reference plane defined by the second direction Y and the third direction Z may be parallel to the housing wall 12 on which the injection hole 11 is formed. The pressure relief assembly 2 may be rectangular. The first direction X and the second direction Y may be a length direction and a width direction of the housing 1, respectively. The third direction Z may be a thickness direction of the battery cell.

The pressure relief assembly 2 is set in such a way that the maximum length L2 thereof along the second direction Y is greater than the maximum length L1 thereof along the third direction Z, so as to increase the contact area between the pressure relief assembly 2 and the housing 1. If the size of the intermediate connector 21 is excessively small, the size of the injection hole 11 may be reduced, thereby affecting the electrolyte injection efficiency. If the size of the intermediate connector 21 is excessively large, the proportion of the area occupied by the intermediate connector 21 on the surface of the housing 1 may increase, thereby being unfavorable for arranging other structures on the housing 1. The length of the intermediate connector 21 in the third direction Z is denoted as L1, and L1 may range from 1.0 mm to 6 mm. Optionally, the length of the intermediate connector 21 in the third direction Z ranges from 1.0 mm to 3.5 mm. The length of the housing 1 along the third direction Z may range from 1.1 mm to 5 mm, and the thickness of the housing wall 12 along the first direction X may range from 0.075 mm to 0.20 mm.

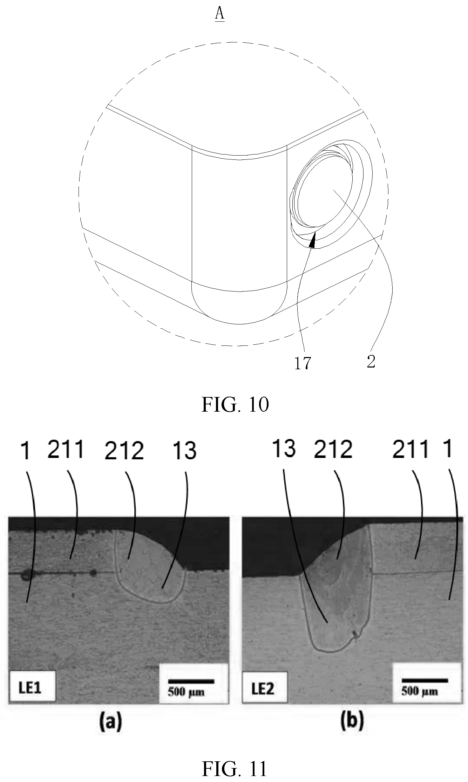

Referring to FIG. 10, in some embodiments, the housing 1 is provided with a recess 17. The recess 17 is recessed toward the battery cell relative to the outer surface of the housing 1. The injection hole 11 is formed in the recess 17. The pressure relief assembly 2 is disposed in the recess 17. A surface, facing away from the intermediate connector, of the pressure relief member 23 is coplanar with the outer surface of the housing 1; or, a surface, facing away from the intermediate connector, of the pressure relief member 23 is located on one side of the outer surface of the housing 1, the side being close to the battery cell.

In some embodiments, the first weld mark portion 212 is a weld mark formed by wobble welding.

Wobble welding may be performed to weld the intermediate connector 21 to the housing 1. During welding of the intermediate connector 21 to the housing 1, a welding torch for welding may move relative to the intermediate connector 21 along a first welding direction, such that a first weld mark portion 212 extending along the first welding direction is formed on the intermediate connector 21. Meanwhile, the welding torch also reciprocates along a second welding direction, such that a moving path of the welding torch is wave-shaped. The first weld mark portion 212 formed on the intermediate connector 21 is well fused, thereby improving the quality of a weld seam, improving the stability of welding between the first weld mark portion 212 and the housing 1, and improving the airtightness between the intermediate connector 21 and the housing 1. The first welding direction intersects the second welding direction.

As an example, during preparation of a battery cell, the intermediate connector 21, the sealing member 22, and the pressure relief member 23 are sequentially stacked to pre-assemble a pressure relief assembly 2. The battery cell is placed in the housing 1, and an electrolyte is injected into the housing 1 through the injection hole 11. An image showing the injection hole 11 is acquired, and the injection hole 11 in the image is identified to obtain first coordinate information of the injection hole 11. Second coordinate information is then obtained based on a preset offset coordinate and the first coordinate information. The pre-assembled pressure relief assembly 2 is controlled, based on the second coordinate information, to be positioned on one side of the injection hole 11, such that the pressure relief assembly 2 covers the injection hole 11. An image showing the intermediate connector 21 is acquired, and the intermediate connector 21 in the image is identified to obtain third coordinate information for welding. A carrier carrying the housing 1 is moved to a position opposite to a laser galvanometer scanner, and a welding gun is controlled, based on the third coordinate information, to direct a laser beam onto a position corresponding to the first weld mark portion 212 in the intermediate connector 21, so as to perform welding and form a first weld mark portion 212 welded to the housing 1. During the welding, the welding torch wobbles at a preset frequency to form a first weld mark portion 212 stably connected to the housing 1.

With the first weld mark portion 212 formed by wobble welding, the stability of connection between the intermediate connector 21 and the housing 1 is improved, thereby reducing or avoiding electrolyte leakage of the battery cell to some extent and improving the safety of the battery cell.

According to a second aspect, this application further provides an electrical device. The electrical device includes the battery cell according to the first aspect. The battery cell is configured to provide electrical energy.

There may be a plurality of battery cells. The plurality of battery cells may be connected in series, parallel, or series-and-parallel pattern to form a whole. The whole of the battery cells are charged from and discharged to an external circuit. The series-and-parallel pattern means a combination of series connection and parallel connection of the plurality of battery cells.

The specific type of the electrical device may be, for example, but is not limited to, a mobile terminal, a smart wearable device, an electric tool, an electric vehicle, or a portable power supply.

Because the battery cell produces the foregoing beneficial effects, the electrical device exhibits high operational safety and reliability.

The foregoing beneficial effects are further illustrated by the following embodiments and comparative embodiments.

### Embodiments 1 to 26

Battery cells are prepared with reference to the parameters shown in Table 1 to Table 3. Unless otherwise specified, the intermediate connector, the sealing member, and the pressure relief member in Embodiments 1 to 26 are the same and are coaxially arranged. A width of the first surface is d1, a minimum spacing between the first projection and the first weld mark portion 212 is d3, and a width of the second surface is d2.

The prepared battery cells are subjected to a bonding strength test. The housing 1 is fixed. Through an ejector pin matched to the injection hole 11, different pushing forces F1 are applied to the intermediate connector 21 to measure the bonding strength between the intermediate connector 21 and the housing 1. The housing 1 and the intermediate connector 21 are then fixed, and through an ejector pin matched to the injection hole 11, a pushing force F2 is applied to the pressure relief member 23 to measure the bonding strength of the sealing member 22 connecting the intermediate connector 21 and the pressure relief member 23. For each embodiment and each comparative embodiment, 100 battery cells are prepared and tested under the same conditions. The bonding strength of the battery cells in each group is measured, and the average value is recorded as the bonding strength of the corresponding embodiment or comparative embodiment.

The prepared battery cells are subjected to a high-temperature/high-humidity test. A fully charged battery cell is stored under open-circuit conditions for 42 days at (65±2) °C and a relative humidity of 90% to 95%. Every 7 days, the battery cell is taken out to check whether electrolyte leakage occurs. If no electrolyte leakage is observed, the fully charged battery cell is recorded as having passed the test. For each embodiment and each comparative embodiment, 100 battery cells are prepared and tested under the same conditions. The percentage of battery cells in each group that pass the test is calculated and recorded as the high-temperature/high-humidity test pass rate.

**Table 1**

| | d1 | d3 | d1+d3 | F1 | F2 | High-temperature and high-humidity test pass rate |
|---|---|---|---|---|---|---|
| | (µm) | (µm) | (µm) | (N) | (N) | |
| Embodiment 1 | 100 | 20 | 120 | 40 | 35 | 90% |
| Embodiment 2 | 100 | 50 | 150 | 40 | 35 | 92% |
| Embodiment 3 | 100 | 100 | 200 | 40 | 36 | 95% |
| Embodiment 4 | 100 | 140 | 240 | 40 | 36 | 97% |
| Embodiment 5 | 100 | 160 | 260 | 40 | 37 | 97% |
| Embodiment 6 | 100 | 180 | 280 | 40 | 40 | 97% |
| Embodiment 7 | 100 | 220 | 320 | 40 | 42 | 98% |
| Embodiment 8 | 100 | 250 | 350 | 40 | 42 | 98% |
| Embodiment 9 | 100 | 280 | 380 | 40 | 42 | 98% |
| Embodiment 10 | 100 | 300 | 400 | 40 | 42 | 99% |
| Embodiment 11 | 100 | 350 | 450 | 40 | 42 | 100% |
| Embodiment 12 | 100 | 400 | 500 | 40 | 42 | 100% |
| Embodiment 13 | 100 | 450 | 550 | 40 | 42 | 100% |
| Embodiment 14 | 100 | 500 | 600 | 40 | 42 | 100% |
| Embodiment 15 | 100 | 0 | 100 | 40 | 25 | 85% |
| Embodiment 16 | 100 | 10 | 110 | 40 | 30 | 88% |
| Embodiment 17 | 100 | 510 | 610 | 40 | 42 | 100% |

F2 represents the bonding strength of the sealing member 22 connecting the intermediate connector 21 and the pressure relief member 23. As can be seen from Embodiments 1 to 14, with d1 being constant, F2 increases with the increase of d3. This indicates that a larger spacing between the sealing member 22 and the first weld mark portion 212 leads to higher bonding strength of the sealing member 22 connecting the intermediate connector 21 and the pressure relief member 23, and more stable structure of the pressure relief assembly 2. With the increase of d3, the electrolyte leakage test pass rate of the battery cells under high-temperature/high-humidity conditions increases, and the safety of the battery cell is higher.

In Embodiment 15, d3 is 0, such that the first weld mark portion 212 formed by welding the intermediate connector 21 to the housing 1 along the edge of the sealing member 22 is arranged along the edge of the sealing member 22. As can be seen from Embodiment 15 versus Embodiment 1, when the first weld mark portion 212 is not spaced apart from the first projection of the sealing member 22, F2 is relatively low, and the electrolyte leakage test pass rate is low. This indicates that the formation of the first weld mark portion 212 adversely affects the sealing member 22, resulting in inferior bonding strength of the sealing member 22 connecting the intermediate connector 21 and the pressure relief member 23, and leading to low safety of the battery cell.

As can be seen from Embodiment 1 versus Embodiment 16, when d3 is less than 20 µm, F2 decreases, indicating that the welding process adversely affects the structure of the sealing member 22. The electrolyte leakage test pass rate of the battery cells under high-temperature/high-humidity conditions is less than 90%, indicating poor safety of the battery cells. As can be seen from Embodiment 8 versus Embodiment 9, when d3 is greater than 220 µm, F2 remains unchanged, and the electrolyte leakage test pass rate of the battery cells under high-temperature/high-humidity conditions remains unchanged. This indicates that, once d3 exceeds 220 µm, a further increase in d3 produces no effect on F2 or on the electrolyte leakage test pass rate. The greater the value of d1+d3, the larger the outer diameter of the intermediate connector 21, which is unfavorable for miniaturization of the pressure relief assembly. Therefore, the value is preferably 50 µm to 220 µm.

**Table 2**

| | d1 | d3 | d1+d3 | F1 | F2 | High-temperature and high-humidity test pass rate |
|---|---|---|---|---|---|---|
| | (µm) | (µm) | (µm) | (N) | (N) | |
| Embodiment 4 | 100 | 140 | 240 | 40 | 36 | 97% |
| Embodiment 18 | 50 | 140 | 190 | 37 | 39 | 92% |
| Embodiment 19 | 90 | 140 | 230 | 39 | 39 | 95% |
| Embodiment 20 | 130 | 140 | 270 | 41 | 39 | 97% |
| Embodiment 21 | 170 | 140 | 310 | 42 | 39 | 97% |
| Embodiment 22 | 210 | 140 | 350 | 43 | 39 | 97% |
| Embodiment 23 | 250 | 140 | 390 | 44 | 39 | 98% |
| Embodiment 24 | 260 | 140 | 400 | 44 | 39 | 98% |
| Embodiment 25 | 40 | 140 | 180 | 35 | 39 | 88% |

F1 represents the strength of bonding between the intermediate connector 21 and the housing 1. As can be seen from Embodiments 4 and 18 to 25, with d3 and d4 being constant, F1 increases with the increase of d1. This indicates that a larger width of the second surface 2122 leads to higher bonding strength between the intermediate connector 21 and the housing 1, and more stable connection between the pressure relief assembly 2 and the housing 1. With the increase of d1, the electrolyte leakage test pass rate of the battery cells under high-temperature/high-humidity conditions increases, and the safety of the battery cell is higher.

As can be seen from Embodiment 24 versus Embodiment 23, when d1 is greater than 250 µm, F1 keeps increasing, but the electrolyte leakage test pass rate of the battery cells under high-temperature/high-humidity conditions remains unchanged. This indicates that, once d1 exceeds 250 µm, a further increase in d3 produces little effect on the electrolyte leakage test pass rate. The greater the value of d1+d3, the larger the outer diameter of the intermediate connector 21, which is unfavorable for miniaturization of the pressure relief assembly. As can be seen from Embodiment 25 versus Embodiment 18, when d1 is less than 50 µm, F1 decreases. The electrolyte leakage test pass rate of the battery cells under high-temperature/high-humidity conditions is less than 90%, indicating poor safety of the battery cells.

**Table 3**

| | d1 | d2 | F1 | F2 | High-temperature and high-humidity test pass rate |
|---|---|---|---|---|---|
| | (µm) | (µm) | (N) | (N) | |
| Embodiment 26 | 100 | 20 | 37 | 39 | 92% |
| Embodiment 27 | 100 | 50 | 38 | 39 | 92% |
| Embodiment 28 | 100 | 80 | 38 | 39 | 93% |
| Embodiment 29 | 100 | 100 | 39 | 39 | 95% |
| Embodiment 30 | 100 | 120 | 39 | 39 | 94% |
| Embodiment 31 | 100 | 150 | 40 | 39 | 90% |
| Embodiment 32 | 100 | 160 | 41 | 39 | 85% |
| Embodiment 33 | 100 | 10 | 20 | 39 | 85% |

As can be seen from Embodiments 26 to 33, with d1 being constant, F1 increases with the increase of d2. This indicates that a larger width of the first surface leads to higher bonding strength between the intermediate connector 21 and the housing 1, and more stable connection between the pressure relief assembly 2 and the housing 1. As can be seen from Embodiments 26 to 29, when d2 ranges from 20 µm to 100 µm, with the increase of d2, the electrolyte leakage test pass rate of the battery cells under high-temperature/high-humidity conditions increases, and the safety of the battery cell is higher. As can be seen from Embodiments 29 to 32, when d2 ranges from 100 µm to 160 µm, with the increase of d2, the electrolyte leakage test pass rate of the battery cells under high-temperature/high-humidity conditions is lower, and the safety of the battery cells is lower. This indicates that, when d2 exceeds a specified threshold, the welding process adversely affects the structure of the sealing member 22, thereby impairing the safety of the battery cells under high-temperature/high-humidity conditions.

As can be seen from Embodiments 33 and 32, when d2 is less than 20 µm or d2 is greater than 150 µm, the electrolyte leakage test pass rate of the battery cells under high-temperature/high-humidity conditions is less than 90%, indicating poor safety of the battery cells.

### Embodiments 34 and 35

Embodiments 34 and 35 use the same preparation method to prepare the battery cells, but differ in that, in Embodiment 34, wobble welding is performed to weld the intermediate connector to the housing, thereby forming the first weld mark portion at the edge of the intermediate connector; and in Embodiment 35, a welding torch moving along a single direction is used to form, at the edge of the intermediate connector, a weld mark connected to the housing.

FIG. 11 shows an SEM image of a partial cross-sectional structure of a battery cell. FIG. 11(a) and FIG. 11(b) show a first weld mark portion 212 formed at an edge of an intermediate connector 21 by using a welding torch according to Embodiment 1. As shown in FIG. 11, through wobble welding, a first weld mark portion 212 can be formed at the edge of the intermediate connector 21 and a second weld mark portion 13 can be formed in the housing 1.

Experiments are conducted to test a sealing rate of sealing an injection hole by pressure relief assemblies in Embodiments 34 and 35. The experimental results show that the sealing rate of the battery cell provided in Embodiment 34 is 100% while the sealing rate of the battery cell provided in Embodiment 35 is 54%. This indicates that both wobble welding and direct laser welding can implement connection between the first weld mark portion 212 and the housing 1. Moreover, the first weld mark portion formed at the edge of the intermediate connector through wobble welding can improve the stability of connection between the first weld mark portion 212 and the housing 1, thereby improving the yield rate of the battery cell.

Moreover, in this specification, the term "and/or" is merely used to describe an association relationship between associated objects, and indicates that three relationships may exist. For example, A and/or B may indicate the following: Only A exists, both A and B exist, and only B exists. In addition, the character "/" herein generally indicates an "or" relationship between the item preceding the character and the item following the character.

Understandably, in embodiments of this application, "B corresponding to A" indicates that B is associated with A, and B can be determined based on A. It is also understandable that determining B based on A does not mean that B is determined solely based on A; rather, B may be determined based on A and/or other information.

The above descriptions are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A battery cell, **characterized in that** the battery cell comprises:
a housing, defining an accommodation space, and provided with an injection hole in communication with the accommodation space; and
a pressure relief assembly, covering the injection hole, wherein the pressure relief assembly comprises an intermediate connector, a sealing member, and a pressure relief member; the housing, the intermediate connector, the sealing member, and the pressure relief member are sequentially stacked along a first direction; the intermediate connector comprises a first main portion and a first weld mark portion; the first main portion comprises a first sidewall disposed along a circumferential direction; and the first weld mark portion connects the first sidewall and the housing.

2. The battery cell according to claim 1, **characterized in that** a projection of the sealing member projected onto the intermediate connector along the first direction is a first projection, and the first projection lies within the first main portion and is spaced apart from the first weld mark portion.

3. The battery cell according to claim 2, **characterized in that** a minimum spacing between the first projection and the first weld mark portion is d3, and d3 ranges from 0.02 mm to 0.5 mm.

4. The battery cell according to claim 3, **characterized in that** d3 ranges from 0.05 mm to 0.22 mm.

5. The battery cell according to claim 1, **characterized in that** a dimension of the first weld mark portion along a second direction is a width of the first weld mark portion, the first weld mark portion comprises a first surface facing away from the housing and a second surface oriented toward the housing, a width of the first surface is d1, and d1 ranges from 0.05 mm to 0.25 mm, and the second direction is perpendicular to the first direction.

6. The battery cell according to claim 5, **characterized in that** a width of the second surface is d2, and d2 ranges from 0.02 mm to 0.15 mm.

7. The battery cell according to claim 1, **characterized in that** the housing comprises a housing wall and a second weld mark portion, and the second weld mark portion is embedded in the housing wall and is connected to the first weld mark portion.

8. The battery cell according to claim 7, **characterized in that** a length of the second weld mark portion along the first direction is H2, and H2 ranges from 0.01 mm to 0.06 mm.

9. The battery cell according to any one of claims 1 to 8, **characterized in that** the intermediate connector is provided with a first through-hole in communication with the injection hole, the sealing member is provided with a second through-hole in communication with the injection hole, and the pressure relief member covers the second through-hole.

10. The battery cell according to claim 9, **characterized in that** the projection of the sealing member projected onto the intermediate connector along the first direction partially falls within the first through-hole.

11. The battery cell according to any one of claims 1 to 8, **characterized in that** an edge of the sealing member is located outward of a projection of the pressure relief member projected onto the sealing member along the first direction.

12. The battery cell according to any one of claims 1 to 8, **characterized in that** a projection of the intermediate connector projected onto the housing along the first direction partially falls within the injection hole.

13. The battery cell according to any one of claims 1 to 8, **characterized in that** the sealing member comprises a first adhesive layer, a second adhesive layer, and a third adhesive layer sequentially arranged along the first direction; a melting point of the second adhesive layer is higher than a melting point of the first adhesive layer; and the melting point of the second adhesive layer is higher than a melting point of the third adhesive layer.

14. The battery cell according to any one of claims 1 to 8, **characterized in that** a maximum length of the housing along a second direction is greater than a maximum length of the pressure relief assembly along a third direction, and a maximum length of the housing along the first direction is greater than the maximum length of the pressure relief assembly along the third direction; and
a maximum length of the pressure relief assembly along the second direction is greater than the maximum length of the pressure relief assembly along the third direction, and the first direction, the second direction, and the third direction are perpendicular to each other.

15. The battery cell according to claim 14, **characterized in that** a length of the intermediate connector along the third direction is L1, and L1 ranges from 1.0 mm to 6 mm.

16. The battery cell according to any one of claims 1 to 8, **characterized in that** the first weld mark portion is a weld mark formed by wobble welding.

17. An electrical device, **characterized in that** the electrical device comprises the battery cell according to any one of claims 1 to 16, and the battery cell is configured to provide electrical energy.
